# EUROPÄISCHE PATENTSCHRIFT

(11) **EP 3 235 556 B1**
(45) Veröffentlichungstag und Bekanntmachung des Hinweises auf die Patenterteilung: **09.10.2019**
(21) Anmeldenummer: 16166200.2
(22) Anmeldetag: 20.04.2016
(51) Int. Cl.: B01D 53/86, B01J 37/08, B01J 23/42

(54) **VERFAHREN ZUR ENTFERNUNG OXIDIERBARER GASFÖRMIGER VERBINDUNGEN AUS EINEM GASGEMISCH MITTELS EINES PLATINHALTIGEN OXIDATIONSKATALYSATORS**
METHOD FOR REMOVING OXIDISABLE GASEOUS COMPOUNDS FROM A GAS MIXTURE BY MEANS OF A PLATINUM-CONTAINING OXIDATION CATALYST
PROCÉDÉ D'ÉLIMINATION DE COMPOSITIONS GAZEUSES OXYDABLES D'UN MÉLANGE GAZEUX À L'AIDE D'UN CATALYSEUR D'OXYDATION CONTENANT DU PLATINE

(43) Veröffentlichungstag der Anmeldung: 25.10.2017
(73) Patentinhaber: Heraeus Deutschland GmbH & Co. KG, 63450 Hanau (DE)
(72) Erfinder: KIEMEL, Rainer, 63505 Langenselbold (DE); CASU, Santiago, 63457 Hanau (DE); KEMMER, Martina, 63796 Kahl am Main (DE); LOCHNER, Nico, 63594 Hasselroth (DE); WALTER, Richard, 63755 Alzenau (DE)
(74) Vertreter: Heraeus IP

(56) Entgegenhaltungen:
- EP-A1- 1 199 096
- WO-A1-97/10891
- WO-A1-2013/121041
- DE-A1- 3 936 743
- RU-C1- 2 515 510
- US-A1- 2008 233 039
- US-A1- 2011 044 874

## Beschreibung

Die vorliegende Erfindung betrifft ein Verfahren zur katalytisch oxidativen Entfernung mindestens einer oxidierbaren gasförmigen Verbindung aus einem Gasgemisch.

Die katalytisch oxidative Entfernung oxidierbarer gasförmiger Verbindungen aus Gasgemischen wird in der Praxis beispielsweise angewandt bei der Reinigung industrieller Abgase oder von Abluft von schädlichen und/oder geruchsbelästigenden gasförmigen Verbindungen oder auch bei der Herstellung reiner Gase oder Gasgemische im Sinne einer Befreiung derselben von oxidierbaren gasförmigen Verunreinigungen. Beispielhaft sei nur die Entfernung gasförmiger Kohlenwasserstoffe aus Abluft genannt; dabei kommt es zu einer katalytisch oxidativen Umsetzung der Kohlenwasserstoffe mit Sauerstoff zu CO₂ und Wasser.

Als Oxidationskatalysatoren kommen beispielsweise platinhaltige Festkörperkatalysatoren zum Einsatz. Solche Oxidationskatalysatoren umfassen üblicherweise poröse Katalysatorträger, deren Porenoberfläche mindestens eine katalytisch aktive Platinspezies aufweist. Zur Herstellung solcher platinhaltiger Festkörperkatalysatoren werden üblicherweise gelöste Platinsalze oder Platinkomplexverbindungen (z.B. Platinnitrat, Platinchloride) als Platinvorläufer verwendet. Das Aufbringen eines gelösten Platinvorläufers auf die Oberfläche eines Katalysatorträgers wird gemeinhin auch Imprägnieren genannt. Die Lösungen von Platinvorläufern können durch verschiedene Verfahren, wie z.B. kapillarkontrolliertes (*incipient wetness*) oder diffusionskontrolliertes Imprägnieren auf poröse Katalysatorträger aufgebracht werden. Anschließend können die Platinvorläufer durch Trocknung auf dem Katalysatorträger fixiert und danach bei höheren Temperaturen durch Kalzinieren zur katalytisch aktiven Platinspezies zersetzt werden.

Bei Verwendung von Platin-chloro-Verbindungen als Platinvorläufer ist meist ein Auswaschen zurückgebliebenen Chlorids aus dem kalzinierten Oxidationskatalysator erforderlich. Eine zusätzliche reduzierende Behandlung des kalzinierten Oxidationskatalysators kann notwendig sein. Dies kann beispielsweise in der Gasphase mittels reduzierender Gase (z.B. H₂) oder in der wässrigen Phase mittels geeigneter Reduktionsmittel geschehen.

WO2011/066009 A2 offenbart zugleich Platin und Ruthenium enthaltende Oxidationskatalysatoren, die zur Entfernung flüchtiger organischer Halogenverbindungen aus einem Abgasstrom dienen können.

US2011/044874 und US2008/233039 offenbaren Platin enthaltende Oxidationskatalysatoren, bei deren Herstellung auch Platinoxalat verwendet wurde.

Es besteht ein anhaltender Bedarf an verbesserten Verfahren zur katalytisch oxidativen Entfernung von oxidierbaren gasförmigen Verbindungen aus Gasgemischen. So ist es beispielsweise wünschenswert, eine solche katalytische Oxidation bei einer möglichst niedrigen Light-off-Temperatur (Anspringtemperatur) durchführen zu können.

Aufgabe der vorliegenden Erfindung ist es, ein gegenüber dem Stand der Technik verbessertes Verfahren zur katalytisch oxidativen Entfernung oxidierbarer gasförmiger Verbindungen aus Gasgemischen bereitzustellen.

Gelöst wird die Aufgabe durch ein Verfahren zur katalytisch oxidativen Entfernung mindestens einer oxidierbaren gasförmigen Verbindung aus einem die mindestens eine oxidierbare gasförmige Verbindung sowie Sauerstoff umfassenden Gasgemisch unter Verwendung eines Oxidationskatalysators, wobei das Gasgemisch kein Verbrennungsabgas ist, dadurch gekennzeichnet, dass der Oxidationskatalysator hergestellt worden ist unter ausschließlicher Verwendung mindestens eines Platinoxalat-Komplexes als exotherm zersetzbarer Platinvorläufer, ohne Verwendung anderer Vorläufer weder von Platin noch von anderen Metallen oder Edelmetallen, wobei es sich bei dem oder den Platinoxalat-Komplexen um durch Umsetzung von Platin-(IV)-hydroxosäure mit Oxalsäure in wässriger Lösung hergestellte komplexe Zusammensetzungen handelt.

Hierin wird der Ausdruck "exotherm zersetzbarer Platinvorläufer" verwendet. Der dabei der Kürze halber verwendete Ausdruck "exotherm zersetzbar" bedeutet präziser ausgedrückt: "unter Wärmeeinwirkung exotherm zersetzbar" oder "thermisch exotherm zersetzbar". Mit anderen Worten, der Ausdruck "exotherm zersetzbarer Platinvorläufer" bedeutet, dass bei thermischer Zersetzung des mindestens einen exotherm zersetzbaren Platinvorläufers Reaktionswärme freigesetzt wird.

Ob ein Platinvorläufer exotherm zersetzbar ist, lässt sich beispielsweise mittels DSC-Messung (Differential Scanning Calorimetry) feststellen, beispielsweise mit einer Aufheizrate von 5 oder 10°C pro Minute. Es kann zweckmäßig sein, die DSC-Messung unter Inertgas, beispielsweise unter Stickstoff oder Argon, durchzuführen, um mögliche Verfälschungen des Messergebnisses durch Luftzutritt zur Probe eines betreffenden Platinvorläufers zu vermeiden. Im Übrigen wird der Fachmann in Kenntnis eines zu vermessenden Platinvorläufers einen gegenüber einer Probe desselben chemisch inerten Probentiegel auswählen, beispielsweise einen Probentiegel aus Gold.

Im DSC-Diagramm (Wärmefluss aufgetragen gegen Temperatur) zeigt eine exotherme Zersetzung ein exothermes Signal. Bei einer endothermen Zersetzung verhält es sich genau umgekehrt, d.h. bei einer endothermen Zersetzung wird Wärme "verbraucht".

Zum Zweck der Charakterisierung mittels DSC können Lösungen von Platinvorläufern schonend unter Vermeidung einer Zersetzung, insbesondere unter Vermeidung einer Zersetzung zu einer katalytisch aktiven Platinspezies, bis zur Gewichtskonstanz eingetrocknet werden.

Das Gasgemisch enthält mindestens eine oxidierbare gasförmige Verbindung oder, genauer gesagt, eine oder mehrere verschiedene oxidierbare gasförmige Verbindungen.

Bei der mindestens einen oxidierbaren gasförmigen Verbindung handelt es sich um eine im Wege einer katalytischen Oxidation aus dem Gasgemisch entfernbare Verbindung.

Um jeglichem Missverständnis vorzubeugen, der hierin verwendete Begriff "Oxidationskatalysator" ist im Sinne eines Katalysators zum Zwecke einer im wesentlichen vollständigen Oxidation oder Totaloxidation zu verstehen. Der Wortlaut "im wesentlichen vollständige Oxidation oder Totaloxidation" bedeutet, dass in der mindestens einen oxidierbaren gasförmigen Verbindung enthaltener Kohlenstoff bzw. Wasserstoff im Wesentlichen oder vollständig, beispielsweise zu 99 % oder mehr bis hin zu 100% zu CO₂ bzw. Wasser oxidiert wird. Insofern versteht der Fachmann das erfindungsgemäße Verfahren auch nicht etwa als ein katalytisches Oxidationsverfahren im Sinne einer chemischen Synthese, sondern als ein Verfahren zur katalytisch oxidativen Entfernung der mindestens einen oxidierbaren gasförmigen Verbindung aus dem Gasgemisch im Sinne einer im wesentlichen vollständigen Oxidation oder Totaloxidation der aus dem Gasgemisch zu entfernenden mindestens einen oxidierbaren gasförmigen Verbindung.

Falls den Umständen nach notwendig oder zweckmäßig, können sich an das erfindungsgemäße Verfahren Schritte zur Entfernung gebildeter gasförmiger Oxidationsprodukte wie beispielsweise insbesondere CO₂ und/oder Wasser anschließen.

Das Gasgemisch ist kein Verbrennungsabgas, d.h. weder ein Abgas aus Verbrennungsprozessen noch ein Abgas aus einem Verbrennungsmotor.

Bevorzugt handelt es sich bei dem Gasgemisch um ein nicht-explosives Gasgemisch. Der Ausdruck "nicht-explosiv" ist hier nicht als absolut zu verstehen. Unter einem nicht-explosiven Gasgemisch ist daher ein solches zu verstehen, das bei Durchführung des erfindungsgemäßen Verfahrens nicht zu einer Explosion führt und das insofern eine Durchführung des Verfahrens erlaubt, ohne dass es dabei zu einer explosionsbedingten Zerstörung des Oxidationskatalysators kommt.

Bei der in dem Gasgemisch enthaltenen bzw. daraus zu entfernenden mindestens einen oxidierbaren gasförmigen Verbindung kann es sich um ein oder mehrere sogenannte VOCs (engl.: volatile organic compounds), also gasförmige oder flüchtige organische Verbindungen handeln, wie zum Beispiel organische Verbindungen mit einem Siedepunkt von beispielsweise bis zu 300°C oder mit einem Sublimationsverhalten. Typische Beispiele für solche VOCs sind Kohlenwasserstoffe und organische Lösungsmittel, wie sie beispielsweise in der chemischen Produktion, der Lack- oder Klebstoffherstellung oder -verarbeitung, bei Reinigungsprozessen usw. Verwendung finden. Kohlenwasserstoffe können beispielsweise auch beim Umgang mit fossilen Brennstoffen beispielsweise bei deren Herstellung oder Verteilung in die Abluft gelangen. Weitere Beispiele für VOCs sind organische Restmonomere aus der Herstellung und Verarbeitung von Polymeren oder auch Geruchsstoffe, wie sie beispielsweise im Lebensmittelbereich (Lebensmittelproduktion, Tiermast, Röstereien, Gärprozesse usw.) entstehen.

In einer bevorzugten Ausführungsform enthält das Gasgemisch keine halogenhaltigen organischen Verbindungen.

Die in dem Gasgemisch enthaltene bzw. im erfindungsgemäßen Verfahren daraus zu entfernende mindestens eine oxidierbare gasförmige Verbindung ist allerdings nicht auf gasförmige oder flüchtige organische Verbindungen beschränkt. Beispielsweise kann es sich bei der mindestens einen oxidierbaren gasförmigen Verbindung auch um anorganische oxidierbare gasförmige Verbindungen wie z.B. Kohlenmonoxid oder Wasserstoff handeln.

Wie nachstehend noch erläutert wird, kann der Mengenanteil der mindestens einen oxidierbaren gasförmigen Verbindung in dem Gasgemisch im jeweiligen Einzelfall recht unterschiedlich sein und insofern einen breiten Bereich überstreichen. So kann der Mengenanteil der mindestens einen oxidierbaren gasförmigen Verbindung in dem Gasgemisch in einem Bereich von beispielsweise 10 Vol.-ppb bis 50000 Vol.-ppm liegen.

Neben der mindestens einen oxidierbaren gasförmigen Verbindung umfasst das Gasgemisch auch Sauerstoff. Das Gasgemisch kann ferner mindestens ein weiteres Gas, insbesondere inertes Gas, enthalten. Das mindestens eine weitere inerte Gas kann insbesondere ausgewählt sein aus Stickstoff, Edelgasen und CO₂.

Der Mengenanteil des Sauerstoffs im Gasgemisch ist insbesondere so bemessen, dass er mindestens stöchiometrisch ausreicht, um die mindestens eine oxidierbare gasförmige Verbindung vollständig oxidieren zu können. Der enthaltene Sauerstoff kann dabei dem Gasgemisch bewusst zugesetzt worden sein oder er bildet von Anbeginn einen Bestandteil des Gasgemischs.

Beispiele für Gasgemische, die eine oder mehrere oxidierbare gasförmige und katalytisch oxidativ entfernbare Verbindungen enthalten, sind entsprechend belastete oder verunreinigte Abluft, Inert- oder auch Prozessgase. Da eine Vielzahl von VOCs bzw. Geruchsstoffen eine Umweltbelastung darstellen, dürfen diese gesetzlichen oder behördlichen Vorschriften entsprechend nicht oder nur in sehr geringen Mengen an die Umgebungsluft bzw. in die Atmosphäre abgegeben werden und müssen somit beispielsweise aus verunreinigter Abluft so weit als möglich oder nötig entfernt werden. Das erfindungsgemäße Verfahren kann aber nicht nur zur Abluftreinigung angewendet werden, sondern auch zur Reinigung von Inert- oder Prozessgas. Mittels des erfindungsgemäßen Verfahrens gereinigtes Inert- oder Prozessgas kann - gegebenenfalls nach Abtrennung gasförmiger Oxidationsprodukte wie insbesondere CO₂ und/oder Wasser - beispielsweise auch gereinigt im Kreis gefahren werden. Auch zum Entfernen von Spuren von Gasen wie Wasserstoff, CO, Kohlenwasserstoffe usw. zur Erzeugung reiner oder reinster Gase bzw. Industriegase (O₂, N₂, CO₂, Edelgase) kann das erfindungsgemäße Verfahren eingesetzt werden.

Einige Beispiele verschiedener Gasgemisch-Typen, aus denen die mindestens eine oxidierbare gasförmige Verbindung mit dem erfindungsgemäßen Verfahren entfernt werden kann, sind im Folgenden aufgeführt:
1. Das Gasgemisch kann beispielsweise zu reinigende Abluft sein. Solche Abluft kann z.B. aus chemischen Reinigungsprozessen, der Lack- oder Klebstoffherstellung oder - verarbeitung, der Chemieproduktion oder dem Lebensmittelbereich stammen. Der Mengenanteil der mindestens einen oxidierbaren gasförmigen Verbindung in solcher Abluft liegt beispielsweise im Bereich von 10 - 50000 Vol.-ppm; der Rest ist üblicherweise gewöhnliche Luft.
2. Das Gasgemisch kann beispielsweise verunreinigtes, an sich inertes Prozessgas (z.B. Stickstoff) mit entsprechendem Sauerstoffzusatz sein. Das Prozessgas kann z.B. aus einem Prozess zur Nachbehandlung und Befreiung von Polymer (z.B. PET) von VOCs wie Restmonomeren, Oligomeren, Lösungsmittel usw. stammen. Der Mengenanteil der mindestens einen oxidierbaren gasförmigen Verbindung im Gasgemisch liegt hierbei beispielsweise im Bereich von 10 - 10000 Vol.-ppm. Der Mengenanteil des Sauerstoffs im Gasgemisch entspricht dabei mindestens der zur vollständigen Oxidation der mindestens einen oxidierbaren gasförmigen Verbindung stöchiometrisch notwendigen Menge und wird, wie gesagt, bewusst zugesetzt. Der Sauerstoffzusatz wird dabei üblicherweise geregelt über eine Analyse beispielsweise mittels einer Lambdasonde oder einer direkten Sauerstoffmessung nach Reinigung des Gasgemischs. Der Mengenanteil des an sich inerten Prozessgases macht den Rest des Gasgemischs aus.
3. Das Gasgemisch kann beispielsweise zu reinigendes Inertgas (z.B. Stickstoff, Edelgase, CO₂) mit entsprechendem Sauerstoffzusatz sein. Reines Inertgas wird in vielfältigen Anwendungen als Prozessgas verwendet. Der Mengenanteil der mindestens einen oxidierbaren gasförmigen Verbindung im Gasgemisch liegt hierbei häufig im Spurenbereich, beispielsweise im Bereich von 1 - 10000 Vol.-ppm. Der Mengenanteil des Sauerstoffs im Gasgemisch entspricht dabei mindestens der zur vollständigen Oxidation der mindestens einen oxidierbaren gasförmigen Verbindung stöchiometrisch notwendigen Menge und wird, wie gesagt, bewusst zugesetzt. Der Sauerstoffzusatz wird dabei geregelt über eine Analyse beispielsweise mittels einer Lambdasonde oder einer direkten Sauerstoffmessung nach Reinigung des Gasgemischs. Der Mengenanteil des Inertgases macht den Rest des Gasgemischs aus.
4. Das Gasgemisch kann beispielsweise zu reinigende Luft sein. Reine Luft wird ebenfalls in einer Vielzahl von Anwendungen eingesetzt, unter anderem auch bei der Luftzerlegung. Der Mengenanteil der mindestens einen oxidierbaren gasförmigen Verbindung im Gasgemisch liegt hierbei häufig im Spurenbereich, beispielsweise im Bereich von 1 - 1000 Vol.-ppm; der Rest ist üblicherweise gewöhnliche Luft.
5. Das Gasgemisch kann beispielsweise zu reinigender Sauerstoff sein. Reiner Sauerstoff wird ebenfalls als Prozessgas in einer Vielzahl von Anwendungen eingesetzt. Der Mengenanteil der mindestens einen oxidierbaren gasförmigen Verbindung im Gasgemisch liegt hierbei beispielsweise im Bereich von 100 Vol.-ppb - 1000 Vol.-ppm. Der Mengenanteil des Sauerstoffs macht den Rest des Gasgemischs aus.

Das Gasgemisch wird abhängig von der Natur seiner Zusammensetzung mit einer Temperatur beispielsweise im Bereich von 0 bis 600 °C in den Oxidationskatalysator eingeleitet. Die Temperatur wird insbesondere so gewählt, dass die vollständige Oxidation der mindestens einen oxidierbaren gasförmigen Verbindung im Wesentlichen oder vollständig gewährleistet ist. Abhängig von der Art der im Gasgemisch enthaltenen mindestens einen oxidierbaren gasförmigen Verbindung kann es daher zweckmäßig sein, das Gasgemisch entsprechend vorgeheizt in den Oxidationskatalysator einzuleiten.

Das Gasgemisch kann mit einer Raumgeschwindigkeit im Bereich von beispielsweise 1000 - 200000 h⁻¹ (Normbedingungen; Gasgemischvolumen pro Stunde im Verhältnis zum Katalysatorvolumen) in den Oxidationskatalysator eingeleitet werden.

Im erfindungsgemäßen Verfahren wird ein Oxidationskatalysator, der unter ausschließlicher Verwendung mindestens eines Platinoxalat-Komplexes als exotherm zersetzbarer Platinvorläufer (mindestens eines exotherm zersetzbaren Platinvorläufers in Form mindestens eines Platinoxalat-Komplexes) hergestellt worden ist, verwendet. Der Oxidationskatalysator ist üblicherweise ein Feststoffkatalysator, der einen oder mehrere poröse Katalysatorträger und mindestens eine katalytisch aktive Platinspezies umfasst.

Der Oxidationskatalysator kann beispielsweise als mit Washcoat beschichteter oder unbeschichteter Monolithkatalysator, als mit Washcoat beschichtete oder unbeschichtete Schüttgutformkörper umfassender Schüttgutkatalysator oder als mit Washcoat beschichteter Metallwaben- oder Metallgestrickkatalysator vorliegen.

Die mindestens eine katalytisch aktive Platinspezies entstammt dem mindestens einen exotherm zersetzbaren Platinvorläufer oder, genauer gesagt, das im erfindungsgemäßen Verfahren verwendeten Oxidationskatalysator enthaltene Platin der mindestens einen katalytisch aktiven Platinspezies entstammt vollständig dem mindestens einen exotherm zersetzbaren Platinvorläufer.

Die dem mindestens einen exotherm zersetzbaren Platinvorläufer entstammende mindestens eine katalytisch aktive Platinspezies kann unter exothermer Zersetzung des mindestens einen exotherm zersetzbaren Platinvorläufers erzeugt werden und sie kann als elementares Platin und/oder als Platinverbindung (z.B. Platinoxid) auf dem oder den porösen Katalysatorträgern des im erfindungsgemäßen Verfahren verwendeten Oxidationskatalysators, insbesondere auf der Porenoberfläche des oder der porösen Katalysatorträger des im erfindungsgemäßen Verfahren verwendeten Oxidationskatalysators, vorliegen.

Typische Monolithkatalysatoren basieren zum Beispiel auf einem Wabenkörper, beispielsweise einem Wabenkörper aus refraktärem Material oder einem keramischen Wabenkörper, mit einer Vielzahl von nebeneinander angeordneten Kanälen oder einer offenporigen Schaumstruktur mit miteinander verbundenen Hohlräumen, durch die Gase hindurch strömen können.

Mit anderen Worten, im Falle eines Monolithkatalysators kann dieser selber den porösen Katalysatorträger darstellen und/oder mit einem Washcoat beschichtet sein, wobei die Washcoatschicht poröse Katalysatorträger in Form poröser Partikel enthält. Die mindestens eine katalytisch aktive Platinspezies kann sich dabei auf der Porenoberfläche des porösen keramischen Wabenkörpers und/oder der porösen Partikel in der Washcoatschicht befinden.

Im Falle von Schüttgutkatalysatoren liegen die porösen Katalysatorträger als Formkörper (wie z.B. Granulat, Presslinge oder Extrudate wie Zylinder, Ringe, Kugeln, Quader, Plättchen) vor. Die Durchmesser oder die Grösse solcher Schüttgutformkörper können beispielsweise im Bereich von etwa 1 bis 20 Millimeter liegen. Mit anderen Worten, die Schüttgutformkörper können selber poröse Katalysatorträger darstellen und/oder mit einem Washcoat beschichtet sein, wobei die Washcoatschicht poröse Katalysatorträger in Form poröser Partikel enthält. Die mindestens eine katalytisch aktive Platinspezies kann sich dabei auf der Porenoberfläche der porösen Schüttgutformkörper und/oder der porösen Partikel in der Washcoatschicht befinden, üblicherweise allerdings insbesondere auf der Porenoberfläche der porösen Schüttgutformkörper.

Im Falle von Metallwaben- oder Metallgestrickkatalysatoren ist die Metalloberfläche im Allgemeinen mit einem Washcoat beschichtet, wobei die Washcoatschicht poröse Katalysatorträger in Form poröser Partikel enthält. Die mindestens eine katalytisch aktive Platinspezies befindet sich dabei üblicherweise auf der Porenoberfläche der porösen Partikel in der Washcoatschicht.

Hierin wurde schon mehrfach der dem Fachmann wohlbekannte Begriff "Washcoat" vorerwähnt; zu unterscheiden ist zwischen einer Washcoat-Slurry und einer daraus applizierten Washcoatschicht. Bei einer Washcoat-Slurry handelt es sich um eine flüssige Beschichtungszusammensetzung, üblicherweise in Form einer wässrigen Suspension, die neben Wasser poröse Katalysatorträgerpartikel mit Teilchengrößen beispielsweise im Bereich von 2 - 100 µm enthält.

Zur Materialauswahl für die porösen Katalysatorträgerpartikel gilt das Gleiche wie zur Materialauswahl für poröse Katalysatorträger in der weiteren Folge noch erläutert.

Washcoat bzw. Washcoat-Slurry kann in zwei grundsätzlich verschiedenen Ausführungsformen existieren.

In der einen Ausführungsform kann eine solche Washcoat-Suspension einen oder mehrere Edelmetallvorläufer enthalten, aus denen nach Applikation, Trocknen und Kalzinieren des zuvor auf ein Substrat aufgebrachten Washcoats katalytisch aktive Edelmetallspezies gebildet werden. Der Edelmetallvorläufer kann dabei mittels einer der nacherwähnten Imprägniermethoden mit den Bestandteile des Washcoats bildenden porösen Katalysatorträgerpartikeln in Kontakt gebracht werden. Dabei können die imprägnierten porösen Katalysatorträgerpartikel separat hergestellt, d.h. imprägniert, getrocknet und kalziniert worden sein und somit katalytisch aktiver Edelmetallspezies schon ausgestattet in die Washcoat-Slurry eingearbeitet werden. Alternativ ist es möglich, den Imprägnierschritt als Prozessschritt der Washcoat-Slurry auszuführen, wobei die Trocknung und Kalzinierung erst nach Applikation der Washcoat-Slurry erfolgt, d.h. erst bei Kalzinierung der aus der Washcoat-Slurry aufgebrachten Washcoatschicht bildet sich die katalytisch aktive Edelmetallspezies aus. Im Fall der vorliegenden Erfindung umfasst oder handelt es sich bei dem oder den Edelmetallvorläufern bzw. der oder den daraus gebildeten katalytisch aktiven Edelmetallspezies um den mindestens einen exotherm zersetzbaren Platinvorläufer bzw. die daraus beim Kalzinieren gebildete mindestens eine katalytisch aktive Platinspezies.

In der anderen Ausführungsform kann eine Washcoat-Slurry allerdings auch frei von jeglichen Edelmetallvorläufern formuliert sein und in dieser Form appliziert, getrocknet und kalziniert werden. In diesem Fall ist es zur Ausstattung der in der kalzinierten Washcoatschicht befindlichen porösen Katalysatorträgerpartikel mit katalytisch aktiver Edelmetallspezies notwendig, Edelmetallvorläufer (üblicherweise als wässrige Lösung) in einem eigenen Verfahrensschritt mit der noch edelmetallfreien aber schon kalzinierten Washcoatschicht durch Imprägnieren in Kontakt zu bringen und nach Trocknung und Kalzinieren die katalytisch aktive Edelmetallspezies auszubilden. Im Fall der vorliegenden Erfindung umfasst oder handelt es sich bei dem oder den Edelmetallvorläufern bzw. der oder den daraus gebildeten katalytisch aktiven Edelmetallspezies um den mindestens einen exotherm zersetzbaren Platinvorläufer bzw. die daraus beim Kalzinieren gebildete mindestens eine katalytisch aktive Platinspezies.

Die verschiedenen Typen der im erfindungsgemäßen Verfahren einsetzbaren Oxidationskatalysatoren haben gemein, dass sie einen oder mehrere poröse Katalysatorträger und mindestens eine katalytisch aktive Platinspezies, die dem mindestens einen exotherm zersetzbaren Platinvorläufer entstammt, umfassen.

Der Platingehalt im im erfindungsgemäßen Verfahren verwendeten Oxidationskatalysator beträgt beispielsweise 0,05 bis 25 g pro Liter Katalysatorvolumen.

Zur Herstellung von porösen Katalysatorträgern mit mindestens einer katalytisch aktiven Platinspezies kann eine im Stand der Technik übliche, dem Fachmann bekannte Vorgehensweise angewendet werden, nämlich das in Kontakt bringen des oder der porösen Katalysatorträger mit einer Lösung eines Platinvorläufers, gefolgt von Trocknen und anschließendem Kalzinieren des oder der so imprägnierten Katalysatorträger unter Ausbildung der katalytisch aktiven Platinspezies auf dem oder den porösen Katalysatorträgern. Im Fall der vorliegenden Erfindung bedeutet dies, dass eine Lösung, vorzugsweise eine wässrige Lösung, des mindestens einen exotherm zersetzbaren Platinvorläufers mit dem oder den porösen Katalysatorträgern in Kontakt gebracht werden kann. Dabei kann der mindestens eine exotherm zersetzbare Platinvorläufer auf den oder die porösen Katalysatorträger aufgebracht werden.

Das Aufbringen des mindestens einen exotherm zersetzbaren Platinvorläufers, auch Imprägnieren genannt, kann über verschiedene Verfahren erfolgen.

Beispielsweise kann die Lösung des mindestens einen exotherm zersetzbaren Platinvorläufers durch Kapillarkräfte getrieben im oder in den porösen Katalysatorträgern aufgesogen werden, sodass das Volumen der Lösung annähernd dem Porenvolumen des oder der porösen Katalysatorträger entspricht (incipient wetness method). Im Anschluss ans Imprägnieren können der oder die porösen Katalysatorträger getrocknet werden. Dieser Trocknungsschritt geschieht vorzugsweise bei Temperaturen im Bereich von 20 bis 150°C und kann dazu dienen, den mindestens einen exotherm zersetzbaren Platinvorläufer auf der Porenoberfläche zu fixieren. Bevorzugt werden mindestens 90 % des Lösungsmittels durch das Trocknen entfernt oder der oder die imprägnierten porösen Katalysatorträger können auch bis zur Gewichtskonstanz getrocknet werden. Nach dem Trocknen können der oder die imprägnierten porösen Katalysatorträger bei Temperaturen beispielsweise im Bereich von 150 - 600°C kalziniert werden. Das Kalzinieren kann sowohl unter Atmosphärenbedingungen als auch unter Inertgasbedingungen erfolgen. Bei dem Kalzinieren kann eine exotherme Zersetzung des mindestens einen exotherm zersetzbaren Platinvorläufers unter Bildung der mindestens einen katalytisch aktiven Platinspezies erfolgen. Die exotherme Zersetzung des mindestens einen exotherm zersetzbaren Platinvorläufers zur mindestens einen katalytisch aktiven Platinspezies kann teilweise oder vollständig erfolgen. Das Trocknen und das Kalzinieren können auch in einem gemeinsamen Schritt erfolgen.

Der oder die porösen Katalysatorträger können prinzipiell aus jedem Material bestehen, das bei den während des erfindungsgemäßen Verfahrens im laufenden Betrieb am Oxidationskatalysator auftretenden Temperaturen von beispielsweise 0 bis 600 °C oder höher, beispielsweise bis hinauf zu 1300°C, strukturstabil ist. Insbesondere kann das Material der porösen Katalysatorträger refraktäre Materialien, beispielsweise keramische Materialien, umfassen oder aus diesen bestehen. Geeignete refraktäre Materialien können beispielsweise ausgewählt sein aus der Gruppe bestehend aus Aluminiumoxiden, Titandioxid, Ceroxiden, Zirkonoxiden, Cer/Zirkon-Mischoxiden, Zeolithen, Aluminiumsilikaten (z.B. Cordierit, Mullit), Siliziumcarbiden und Siliziumnitriden.

Die genannten refraktären Materialien können alleine oder in Kombination, beispielsweise als Mischungen, vorliegen. Bevorzugte refraktäre Materialien können beispielsweise ausgewählt sein aus der Gruppe der Aluminiumoxide, beispielsweise γ-Aluminiumoxid. Die refraktären Materialien können Dotierungen aufweisen. Geeignete Dotierungsmittel können ausgewählt sein aus der Gruppe bestehend aus Seltenerdmetallen, Übergangsmetallen und Erdalkalimetallen. Insbesondere kann das Dotierungsmittel mindestens ein Element ausgewählt aus der Gruppe bestehend aus La, Ba, Sr, Zr und Mn sein. Die Dotierung kann beispielsweise dazu dienen, die Temperaturbeständigkeit eines porösen Aluminiumoxids zu erhöhen.

Es ist erfindungswesentlich, dass der im erfindungsgemäßen Verfahren verwendete Oxidationskatalysator unter ausschließlicher Verwendung des mindestens einen exotherm zersetzbaren Platinvorläufers hergestellt worden ist, oder, anders ausgedrückt und wie auch dem Vorerwähnten schon zu entnehmen ist, ist es erfindungswesentlich, dass die als elementares Platin und/oder als Platinverbindung (z.B. Platinoxid) auf der Porenoberfläche des oder der porösen Katalysatorträger vorliegende mindestens eine katalytisch aktive Platinspezies unter ausschließlicher Verwendung des mindestens einen exotherm zersetzbaren Platinvorläufers, insbesondere unter Verwendung einer Lösung dessen, hergestellt worden ist und demzufolge dem mindestens eines exotherm zersetzbaren Platinvorläufer entstammt. Es wurde gefunden, dass sich die mindestens eine oxidierbare gasförmige Verbindung dann bei einer vergleichsweise niedrigen Light-off-Temperatur aus einem Gasgemisch entfernen lässt. Bei Verwendung von Oxidationskatalysatoren, die ohne Verwendung exotherm zersetzbarer Platinvorläufer hergestellt worden sind, wurden höhere Light-off-Temperaturen gefunden.

Der mindestens eine exotherm zersetzbare Platinvorläufer wird bzw. wurde insbesondere in Form einer Lösung, speziell in Form einer wässrigen Lösung, zur Herstellung des Oxidationskatalysators bzw. des oder der porösen Katalysatorträger mit der mindestens einen katalytisch aktiven Platinspezies verwendet.

Der oder die exotherm zersetzbaren Platinvorläufer sind Platinoxalat-Komplexe. Platinoxalat-Komplexe sind schon lange bekannt. So haben Krogmann und Dodel schon 1966 zum Beispiel für einen Platinoxalat-Komplex im festen Zustand die Formel (H₃O)_{1,6}[Pt(C₂O₄)₂] · 2H₂O mit Platin einer mittleren Oxidationsstufe von 2,4 angegeben. Bei Platinoxalat-Komplexen handelt es sich um komplexe Zusammensetzungen, die sich herstellen lassen durch Umsetzung von H₂Pt(OH)₆ mit Oxalsäure in wässriger Lösung. Die Komplexe können neben Oxalat auch Wasser enthalten. Bevorzugte Platinoxalat-Komplexe und ihre Herstellung sind beispielsweise auch in WO2014/053351 A1 beschrieben; dort werden als Ausgangsstoffe insbesondere Platin-(IV)-hydroxosäure und Oxalsäure besonders bevorzugt verwendet und dabei als geeignetes stöchiometrisches Verhältnis festgestellt, dass Oxalsäure in 1,8 bis 2,8 molaren Äquivalenten in Bezug auf Platin in Form des Platin-Präkursors, d.h. der Platin-(IV)-hydroxosäure zugegeben wird.

Es ist vorteilhaft, dass sich Platinoxalat-Komplexe bei ihrer Kalzinierung neben der Bildung von katalytisch aktiver Platinspezies praktisch rückstandsfrei, insbesondere beispielsweise ohne Entwicklung giftiger Stickoxide, exotherm zersetzen lassen.

Bei der Herstellung eines Oxidationskatalysators unter ausschließlicher Verwendung des mindestens einen Platinoxalat-Komplexes als exotherm zersetzbarer Platinvorläufer kann nach der Kalzinierung eine wie eingangs schon erwähnte Reduktionsbehandlung des Katalysators stattfinden. Vorteilhaft ist es jedoch, dass dies nicht notwendig ist, was eine signifikante Vereinfachung des Herstellprozesses für den Oxidationskatalysator darstellt.

Der im erfindungsgemäßen Verfahren verwendete Oxidationskatalysator wird unter ausschließlicher Verwendung mindestens eines Platinoxalat-Komplexes, d.h. ohne Verwendung anderer Vorläufer weder von Platin noch von anderen Metallen oder Edelmetallen hergestellt bzw. ist so hergestellt worden.

Wie schon gesagt, kann der im erfindungsgemäßen Verfahren verwendete Oxidationskatalysator in Form eines der schon genannten einen oder mehrere poröse Katalysatorträger und mindestens eine katalytisch aktive Platinspezies umfassenden Feststoffkatalysatoren vorliegen und dabei insbesondere in folgenden Ausführungsformen:
- als mit einer Lösung des mindestens einen exotherm zersetzbaren Platinvorläufers imprägnierter und unter Bildung der mindestens einen katalytisch aktiven Platinspezies kalzinierter Monolithkatalysator; poröser Katalysatorträger ist hier der Monolith als solcher,
- als mit einer unter Bildung der mindestens einen katalytisch aktiven Platinspezies kalzinierter Washcoatschicht versehener Monolithkatalysator; poröse Katalysatorträger sind hier die mit der mindestens einen katalytisch aktiven Platinspezies ausgestatteten porösen Katalysatorträgerpartikel innerhalb der Washcoatschicht,
- als mit einer Lösung des mindestens einen exotherm zersetzbaren Platinvorläufers imprägnierter und unter Bildung der mindestens einen katalytisch aktiven Platinspezies kalzinierter und zusätzlich mit einer unter Bildung der mindestens einen katalytisch aktiven Platinspezies kalzinierten Washcoatschicht versehener Monolithkatalysator; poröse Katalysatorträger sind hier der Monolith als solcher als auch die mit der mindestens einen katalytisch aktiven Platinspezies ausgestatteten porösen Katalysatorträgerpartikel innerhalb der Washcoatschicht,
- als Schüttgutkatalysator mit mit einer Lösung des mindestens einen exotherm zersetzbaren Platinvorläufers imprägnierten und unter Bildung der mindestens einen katalytisch aktiven Platinspezies kalzinierten Schüttgutformkörpern; poröse Katalysatorträger sind hier die Schüttgutformkörper als solche,
- als Schüttgutkatalysator mit mit einer unter Bildung der mindestens einen katalytisch aktiven Platinspezies kalzinierter Washcoatschicht versehenen Schüttgutformkörpern; poröse Katalysatorträger sind hier die mit der mindestens einen katalytisch aktiven Platinspezies ausgestatteten porösen Katalysatorträgerpartikel innerhalb der Washcoatschicht,
- als Schüttgutkatalysator mit mit einer Lösung des mindestens einen exotherm zersetzbaren Platinvorläufers imprägnierten und unter Bildung der mindestens einen katalytisch aktiven Platinspezies kalzinierten und zusätzlich mit einer unter Bildung der mindestens einen katalytisch aktiven Platinspezies kalzinierten Washcoatschicht versehenen Schüttgutformkörpern; poröse Katalysatorträger sind hier die Schüttgutformkörper als solche als auch die mit der mindestens einen katalytisch aktiven Platinspezies ausgestatteten porösen Katalysatorträgerpartikel innerhalb der Washcoatschicht,
- als mit einer unter Bildung der mindestens einen katalytisch aktiven Platinspezies kalzinierten Washcoatschicht versehener Metallwabenkatalysator; poröse Katalysatorträger sind hier die mit der mindestens einen katalytisch aktiven Platinspezies ausgestatteten porösen Katalysatorträgerpartikel innerhalb der Washcoatschicht,
- als mit einer unter Bildung der mindestens einen katalytisch aktiven Platinspezies kalzinierten Washcoatschicht versehener Metallgestrickkatalysator; poröse Katalysatorträger sind hier die mit der mindestens einen katalytisch aktiven Platinspezies ausgestatteten porösen Katalysatorträgerpartikel innerhalb der Washcoatschicht.

### Beispiele

Die in den Beispielen verwendeten Platinoxalat-Komplexe wurden gemäß WO2014/053351 A1, Beispiel 1 hergestellt. Bei dem in den Beispielen verwendeten Platinethanolamin handelte es sich um das von HERAEUS unter der Bezeichnung "Pt EA" vertriebene Produkt (Lösung von Bis(ethanolammonium)hexahydroxoplatin [(HOCH₂CH₂NH₄)₂[Pt(OH)₆]).

### Beispiel 1 (Herstellung eines Oxidationskatalysators)

30 ml einer wässrigen Lösung von Platinoxalat-Komplexen (500 mg Pt in 30 ml Lösung) wurden in einer Rollierflasche mit 100 g Al₂O₃-Pellets (Durchmesser 2-4 mm) vermischt. Die Pellets wurden zunächst bei 50°C getrocknet. Die so imprägnierten und getrockneten Pellets wurden danach in einem Trockenschrank unter Stickstoffatmosphäre bei 250°C kalziniert. Anschließend wurde auf Raumtemperatur abgekühlt.

### Beispiel 2 (nicht erfindungsgemäß)

Analog zu Beispiel 1 wurde ein Oxidationskatalysator hergestellt, wobei anstelle der Lösung von Platinoxalat-Komplexen eine wässrige Lösung von Platinethanolamin (500 mg Pt in 30 ml Lösung) verwendet wurde.

### Referenzbeispiel 3

Analog zu Beispiel 1 wurde ein Oxidationskatalysator hergestellt, wobei anstelle der Lösung von Platinoxalat-Komplexen eine wässrige salpetersaure Lösung von Platinnitrat (500 mg Pt in 30 ml Lösung) verwendet wurde.

### Beispiel 4

In einer Katalysatortestanlage wurden die in den Beispielen 1 bis 3 hergestellten Oxidationskatalysatoren untersucht. Dazu wurden je 70 ml der Oxidationskatalysatoren in den Reaktor eingebaut. Ein Gasgemisch aus synthetischer Luft mit 1000 Vol.-ppm Methan und 1000 Vol.-ppm Propan wurde mit einer Geschwindigkeit von 10000 h⁻¹ über die Oxidationskatalysatoren geleitet. Die Mengenanteile von Methan und Propan im Gasgemisch wurden vor und hinter dem Oxidationskatalysator mittels Gaschromatographie gemessen und so der Umsatz bestimmt. Für die Bestimmung der Light-off-Temperatur (T₅₀) wurde der Gasstrom bei 600°C über den Oxidationskatalysator geleitet und während einer anschließenden Abkühlphase der Umsatz von Methan und Propan bestimmt. Die so erhaltenen Umsatzkurven wurden ausgewertet und es wurde jeweils die Temperatur T₅₀ bestimmt, bei der 50% Umsatz erfolgt. Die Ergebnisse der Messungen sind in nachfolgender Tabelle zusammengefasst.

| | | **T₅₀ [°C]** | |
|---|---|---|---|
| **Oxidationskatalysator aus Beispiel** | **Pt-Vorläufer** | **für C₃H₈** | **für CH₄** |
| 1 | Platinoxalat-Komplexe | 239 | 459 |
| 2 (nicht erfindungsgemäß) | Platinethanolamin | 232 | 460 |
| 3 (Vgl.) | Platinnitrat | 282 | 498 |

## Patentansprüche

1. Verfahren zur katalytisch oxidativen Entfernung mindestens einer oxidierbaren gasförmigen Verbindung aus einem die mindestens eine oxidierbare gasförmige Verbindung sowie Sauerstoff umfassenden Gasgemisch unter Verwendung eines Oxidationskatalysators, wobei das Gasgemisch kein Verbrennungsabgas ist, **dadurch gekennzeichnet, dass** der Oxidationskatalysator hergestellt worden ist unter ausschließlicher Verwendung mindestens eines Platinoxalat-Komplexes als exotherm zersetzbarer Platinvorläufer, ohne Verwendung anderer Vorläufer weder von Platin noch von anderen Metallen oder Edelmetallen, wobei es sich bei dem oder den Platinoxalat-Komplexen um durch Umsetzung von Platin-(IV)-hydroxosäure mit Oxalsäure in wässriger Lösung hergestellte komplexe Zusammensetzungen handelt.

2. Verfahren nach Anspruch 1, **dadurch gekennzeichnet, dass** ein Platinoxalat-Komplex verwendet wird.

3. Verfahren nach Anspruch 1 oder 2, wobei die Oxalsäure in 1,8 bis 2,8 molaren Äquivalenten in Bezug auf Platin der Platin-(IV)-hydroxosäure zugegeben wird.

4. Verfahren nach Anspruch 2 oder 3, wobei der eine Platinoxalat-Komplex im festen Zustand die Formel (H₃O)_{1,6}[Pt(C₂O₄)₂] · 2H₂O mit Platin einer mittleren Oxidationsstufe von 2,4 hat.

5. Verfahren nach einem der vorhergehenden Ansprüche, wobei das Gasgemisch nicht-explosiv ist.

6. Verfahren nach einem der vorhergehenden Ansprüche, wobei die mindestens eine oxidierbare gasförmige Verbindung ausgewählt ist aus der Gruppe bestehend aus VOCs, Kohlenmonoxid und Wasserstoff.

7. Verfahren nach einem der vorhergehenden Ansprüche, wobei das Gasgemisch keine halogenhaltigen organischen Verbindungen enthält.

8. Verfahren nach einem der vorhergehenden Ansprüche, wobei die mindestens eine oxidierbare gasförmige Verbindung in einem Mengenanteil im Bereich von 10 Vol.-ppb bis 50000 Vol.-ppm in dem Gasgemisch enthalten ist.

9. Verfahren nach einem der vorhergehenden Ansprüche, wobei der Sauerstoff in einem Mengenanteil, der mindestens stöchiometrisch ausreicht, um die mindestens eine oxidierbare gasförmige Verbindung vollständig oxidieren zu können, in dem Gasgemisch enthalten ist.

10. Verfahren nach einem der vorhergehenden Ansprüche, wobei das Gasgemisch mindestens ein inertes Gas ausgewählt aus der Gruppe bestehend aus Stickstoff, Edelgasen und CO₂ enthält.

11. Verfahren nach einem der vorhergehenden Ansprüche, wobei das Gasgemisch mit einer Temperatur im Bereich von 0 bis 600 °C in den Oxidationskatalysator eingeleitet wird.

12. Verfahren nach einem der vorhergehenden Ansprüche, wobei der Oxidationskatalysator ein Feststoffkatalysator ist, der einen oder mehrere poröse Katalysatorträger und mindestens eine katalytisch aktive Platinspezies umfasst.

13. Verfahren nach einem der vorhergehenden Ansprüche, wobei der Oxidationskatalysator ein mit Washcoat beschichteter oder unbeschichteter Monolithkatalysator, ein mit Washcoat beschichteter oder unbeschichtete Schüttgutformkörper umfassender Schüttgutkatalysator oder ein mit Washcoat beschichteter Metallwaben- oder Metallgestrickkatalysator ist.

14. Verfahren nach einem der vorhergehenden Ansprüche, wobei der Platingehalt im Oxidationskatalysator 0,05 bis 25 g pro Liter Katalysatorvolumen beträgt.

15. Verfahren nach einem der Ansprüche 12 bis 14, wobei das Material des oder der porösen Katalysatorträger refraktäres Material umfasst oder daraus besteht.

16. Verfahren nach Anspruch 15, wobei das refraktäre Material ausgewählt ist aus der Gruppe bestehend aus Aluminiumoxiden, Titandioxid, Ceroxiden, Zirkonoxiden, Cer/Zirkon-Mischoxiden, Zeolithen, Aluminiumsilikaten, Siliziumcarbiden, Siliziumnitriden und beliebigen Kombinationen.

17. Verfahren nach einem der vorhergehenden Ansprüche, wobei der mindestens eine Platinoxalat-Komplex in Form einer Lösung zur Herstellung des Oxidationskatalysators verwendet worden ist.

## Claims

1. Process for removal by catalytic oxidation of at least one oxidisable gaseous compound from a gas mixture comprising the at least one oxidisable gaseous compound as well as oxygen, through the use of an oxidation catalyst, whereby the gas mixture is not a combustion exhaust gas, **characterised in that** the oxidation catalyst was produced through the exclusive use of at least one platinum oxalate complex as platinum precursor that can be decomposed exothermically, without the use of other precursors, neither of platinum nor of other metals or precious metals, whereby the platinum oxalate complex or complexes is/are complex compositions produced by reacting platinum-(IV)-hydroxo acid with oxalic acid in aqueous solution.

2. Process according to claim 1, **characterised in that** one platinum oxalate complex is being used.

3. Process according to claim 1 or 2, whereby the oxalic acid is added in 1.8 to 2.8 molar equivalents with respect to platinum of the platinum-(IV)-hydroxo acid.

4. Process according to claim 2 or 3, whereby the one platinum oxalate complex, in the solid-state, is represented by the formula (H₃O)_{1.6}[Pt(C₂O₄)₂] · 2H₂O with platinum of a mean oxidation state of 2.4.

5. Process according to any one of the preceding claims, whereby the gas mixture is non-explosive.

6. Process according to any one of the preceding claims, whereby the at least one oxidisable gaseous compound is selected from the group consisting of the VOCs, carbon monoxide, and hydrogen.

7. Process according to any one of the preceding claims, whereby the gas mixture does not contain any halogen-containing organic compounds.

8. Process according to any one of the preceding claims, whereby the gas mixture contains a mass fraction in the range of 10 vol.-ppb to 50,000 vol.-ppb of the at least one oxidisable gaseous compound.

9. Process according to any one of the preceding claims, whereby the gas mixture contains a mass fraction of oxygen that is at least stoichiometrically sufficient to be able to fully oxidise the at least one oxidisable gaseous compound.

10. Process according to any one of the preceding claims, whereby the gas mixture contains at least one inert gas selected from the group consisting of nitrogen, noble gases, and CO₂.

11. Process according to any one of the preceding claims, whereby the gas mixture being supplied into the oxidation catalyst has a temperature in the range from 0 to 600°C.

12. Process according to any one of the preceding claims, whereby the oxidation catalyst is a solid catalyst that comprises one or more porous catalyst supports and at least one catalytically active platinum species.

13. Process according to any one of the preceding claims, whereby the oxidation catalyst is a washcoat-coated or -uncoated monolith catalyst, a bulk catalyst comprising washcoat-coated or -uncoated bulk moulded bodies or a washcoat-coated metal honeycomb or metal mesh catalyst.

14. Process according to any one of the preceding claims, whereby the platinum content in the oxidation catalyst is 0.05 to 25 g per litre of catalyst volume.

15. Process according to any one of the claims 12 to 14, whereby the material of the porous catalyst support or supports comprises or consists of refractory material.

16. Process according to claim 15, whereby the refractory material is selected from the group consisting of aluminium oxides, titanium dioxide, cerium oxides, zirconium oxides, cerium/zirconium mixed oxides, zeolites, aluminium silicates, silicon carbides, silicon nitrides, and any combinations thereof.

17. Process according to any one of the preceding claims, whereby the at least one platinum oxalate complex was used in the form of a solution for production of the oxidation catalyst.

## Revendications

1. Procédé pour l'élimination catalytiquement oxydative au moins d'un composé gazeux oxydable, constitué d'un mélange gazeux comprenant au moins un composé gazeux oxydable et de l'oxygène, avec l'utilisation d'un catalyseur d'oxydation, le mélange gazeux n'étant pas un gaz d'échappement de combustion, **caractérisé en ce que** le catalyseur d'oxydation a été fabriqué en utilisant exclusivement au moins un complexe d'oxalate de platine comme précurseur du platine décomposable par voie exothermique, sans l'utilisation d'autres précurseurs du platine, ni d'autres métaux ou métaux rares, le ou les complexes d'oxalate de platine étant des compositions complexes fabriquées par la mise en oeuvre d'acide hydroxyque de platine (IV) avec de l'acide oxalique dans une solution aqueuse.

2. Procédé conformément à la revendication n°1, **caractérisé en ce qu'**un complexe d'oxalate de platine est utilisé.

3. Procédé conformément à la revendication n°1 ou n°2, l'acide oxalique étant ajouté en 1,8 à 2,8 équivalents molaires en ce qui concerne le platine de l'acide hydroxyque de platine (IV).

4. Procédé conformément à la revendication n°1 ou n°2, le complexe d'oxalate de platine à l'état solide présentant la formule (H₃O)_{1,6}[Pt(C₂O₄)₂] . 2H₂O avec du platine d'un stade d'oxydation intermédiaire de 2,4.

5. Procédé conformément à l'une des revendications précédentes, le mélange gazeux étant non-explosif.

6. Procédé conformément à l'une des revendications précédentes, au moins un composé gazeux oxydable étant sélectionné dans le groupe constitué de COV, de monoxyde de carbone et d'hydrogène.

7. Procédé conformément à l'une des revendications précédentes, le mélange gazeux ne contenant pas de composés organiques halogénés.

8. Procédé conformément à l'une des revendications précédentes, au moins un composé gazeux oxydable étant contenu dans le mélange gazeux dans une proportion de l'ordre de 10 ppb de volume à 50000 ppb de volume.

9. Procédé conformément à l'une des revendications précédentes, l'oxygène étant contenu dans le mélange gazeux dans une proportion qui suffit au moins sur le plan stoechiométrique pour pouvoir oxyder entièrement au moins un composé gazeux oxydable.

10. Procédé conformément à l'une des revendications précédentes, le mélange gazeux contenant au moins un gaz inerte sélectionné dans le groupe constitué d'azote, de gaz rares et de CO₂.

11. Procédé conformément à l'une des revendications précédentes, le mélange gazeux étant amorcé à une température comprise entre 0 et 600°C dans le catalyseur d'oxydation.

12. Procédé conformément à l'une des revendications précédentes, le catalyseur d'oxydation étant un catalyseur solide qui comprend un ou plusieurs supports de catalyseurs poreux et au moins une sorte de platine catalytiquement active.

13. Procédé conformément à l'une des revendications précédentes, le catalyseur d'oxydation étant un monolithe catalytique revêtu d'une couche « washcoat » ou non revêtu, un catalyseur de produit en vrac comprenant un corps formé de produit en vrac, revêtu d'une couche « washcoat » ou non revêtu, ou bien un catalyseur à alvéoles métalliques ou tricot métallique, revêtu d'une couche « washcoat ».

14. Procédé conformément à l'une des revendications précédentes, la teneur en platine dans le catalyseur d'oxydation s'élevant à 0,05 à 25 g par litre de volume de catalyseur.

15. Procédé conformément à l'une des revendications n°12 à n°14, la matière du ou des supports de catalyseurs poreux contenant une matière réfractaire ou étant composée de celle-ci.

16. Procédé conformément à la revendication n°15, la matière réfractaire étant sélectionnée dans le groupe constitué d'oxydes d'aluminium, de dioxyde de titane, d'oxydes de cérum, d'oxydes de zirconium, d'oxydes mixtes cérum/zirkonium, de zéolithes, de silicates d'aluminium, de carbures de silicium, de nitrures de silicium et de combinaisons quelconques.

17. Procédé conformément à l'une des revendications précédentes, au moins un complexe d'oxalate de platine ayant été utilisé sous forme de solution pour la fabrication du catalyseur d'oxydation.
